# EUROPÄISCHE PATENTSCHRIFT

(11) **EP 3 967 898 B1**
(45) Veröffentlichungstag und Bekanntmachung des Hinweises auf die Patenterteilung: **22.03.2023**
(21) Anmeldenummer: 21195487.0
(22) Anmeldetag: 08.09.2021
(51) Int. Cl.: F16F 9/02, F16F 9/52

(54) **GASDRUCKFEDER, VERFAHREN ZUR HERSTELLUNG DER GASDRUCKFEDER, ANTRIEB FÜR EINE KLAPPE MIT DER GASDRUCKFEDER**
GAS COMPRESSION SPRING, METHOD FOR MANUFACTURING THE GAS COMPRESSION SPRING, DRIVE FOR A FLAP WITH THE GAS COMPRESSION SPRING
RESSORT À PRESSION DE GAZ, PROCÉDÉ DE FABRICATION DU RESSORT À PRESSION DE GAZ, ENTRAÎNEMENT POUR UN VOLET POURVU DE RESSORT À PRESSION DE GAZ

(30) Priorität: 10.09.2020 DE 102020123636
(43) Veröffentlichungstag der Anmeldung: 16.03.2022
(73) Patentinhaber: STABILUS GmbH, 56070 Koblenz (DE)
(72) Erfinder: Reiser, Alexander, 56294 Münstermaifeld (DE); Probst, Ulrich, 56204 Hilscheid (DE); Beib, Felix, 56070 Koblenz (DE)
(74) Vertreter: Bernsmann, Falk

(56) Entgegenhaltungen:
- EP-A2- 1 795 777
- DE-A1- 19 812 750
- JP-U- S5 913 735

## Beschreibung

### Technisches Gebiet

Die Erfindung betrifft eine Gasdruckfeder mit einem Arbeitszylinder, der einen mit einem Arbeitsgas gefüllten inneren Arbeitsraum umschließt, einem in dem inneren Arbeitsraum entlang einer Hubachse verschieblich gelagerten Arbeitskolben, einem Ausgleichszylinder, der den Arbeitszylinder zumindest über eine Teillänge des Arbeitszylinders entlang der Hubachse umschließt, und einem in einem Ausgleichsraum radial zur Hubachse zwischen dem Arbeitszylinder und dem Ausgleichszylinder angeordneten, sich bei Temperaturerhöhung ausdehnenden Ausgleichsmedium.

Die Erfindung betrifft ferner ein Verfahren zur Herstellung der Gasdruckfeder und einen Antrieb für eine Klappe mit der Gasdruckfeder.

### Stand der Technik

Das in Gasdruckfedern enthaltene Gas dehnt sich bei steigender Temperatur T aus und zieht sich bei sinkender Temperatur T zusammen bzw. bei konstantem Volumen V steigt oder sinkt der Gasdruck p (bei einem idealem Gas gemäß: p*V = n*R*T). Dadurch ist auch die von einer Gasdruckfeder bereitgestellte Federkraft temperaturabhängig. In manchen Anwendungen führt dies zu Problemen, weshalb es von Vorteil wäre, diesen Effekt zu kompensieren.

Beispielsweise bei der Verwendung in einer Heckklappe eines Fahrzeugs führt die Temperaturabhängigkeit der Federkraft dazu, dass die Gasdruckfeder stärker als für die meisten Temperaturen nötig ausgestaltet sein muss, um auch bei niedrigen Temperaturen (z.B. bei -30 °C bis 0 °C) eine ausreichende Federkraft bereitzustellen, um die Heckklappe zuverlässig offenzuhalten. Dies erhöht aber im Mittel die notwendige Motorkraft eines automatischen Antriebs, der die Heckklappe gegen die Gasdruckfeder schließen soll, da die Gasdruckfeder meist bei mittleren Temperaturen (z.B. von 0 °C bis 25 °C) betrieben wird und dort eine höhere Federkraft hat als notwendig wäre. Eine hohe Motorkraft erfordert einen unerwünscht großen und schweren Motor und führt zu einem unerwünscht hohen Energieverbrauch des Motors. Außerdem verringert sich durch die Temperaturabhängigkeit der Federkraft bei manueller Bedienung der Bedienungskomfort bei mittleren und höheren Temperaturen (z.B. über 25 °C), da eine hohe Kraft notwendig ist, um die Gasdruckfeder beim Schließen der Heckklappe zu komprimieren.

Die Patentanmeldung EP 1 795 777 A1 beschreibt eine Gasdruckfeder, umfassend einen Arbeitszylinder, der zusammen mit einer Ausgleichskolbenanordnung einen mit einem Arbeitsmedium gefüllten Arbeitsraum umgrenzt. Die Ausgleichskolbenanordnung ist von dem Druck des Arbeitsmediums und dem Druck eines in einem Ausgleichsraum vorgesehenen, sich bei Temperaturerhöhung ausdehnenden Ausgleichsmediums in einem das Volumen des Arbeitsraums vergrößernden Sinne beaufschlagt. Das Ausgleichsmedium reduziert also die Temperaturabhängigkeit der Gasdruckfederkraft, indem es das dem Arbeitsmedium zur Verfügung stehende Volumen temperaturabhängig anpasst.

Zur Zeit werden zur Kompensation der Temperaturabhängigkeit der Federkraft einer Gasdruckfeder im Stand der Technik mehrere nicht optimale Lösungen angeboten:
a. Temperaturkompensation durch Freischalten eines zusätzlichen Volumens bei Kälte, beispielsweise über ein tempergetriebenes Ventil wie in DE 11 2006 000 335 T5 beschrieben,
b. die Verwendung von Federbeinen, also insbesondere einer Kombination aus Gasdruckfeder und mechanischer Feder, sowie
c. die in EP 1 795 777 A1 beschriebene Verwendung eines Ausgleichmediums zur Reduktion der Temperaturabhängigkeit.

Die Option a hat einen begrenzten Temperatur-Kompensationsgrad und eine veränderte Federkennung durch das Freischalten des zusätzlichen Volumens. Außerdem ist die Baulänge erheblich höher als bei einer einfachen Gasdruckfeder.

Die Option b hat den Nachteil, dass ausreichend dimensionierte Federbeine sehr teuer in der Herstellung und schwer sind und eine ungünstige Federkennung aufweisen. Außerdem kann die Temperaturabhängigkeit nicht vollständig aufgehoben werden.

Die Option c ist technisch sehr aufwändig und vor allem in Hinblick auf die Montage nicht kostengünstig umzusetzen. Außerdem kann im Ausgleichsraum unter bestimmten Betriebsbedingungen sehr hoher Druck entstehen, der Dichtelemente und Rohre der Gasdruckfeder stark beansprucht. Weiterhin verlängert sich die Baulänge der Gasdruckfeder dadurch, dass die Temperaturkompensation durch eine Verlängerung des Arbeitsraums erzielt wird, gegenüber einer unkompensierten Gasdruckfeder erheblich, was die Anwendungsmöglichkeiten deutlich einschränkt.

### Technische Aufgabe

Die Aufgabe der Erfindung ist es, eine kostengünstige, vielseitig einsetzbare und langlebige Gasdruckfeder bereitzustellen, die eine möglichst geringe Temperaturabhängigkeit der Federkraft aufweist. Außerdem ist es die Aufgabe der Erfindung, ein möglichst kostengünstiges und zuverlässiges Herstellungsverfahren für die Gasdruckfeder zu schaffen.

### Technische Lösung

Der Gegenstand der vorliegenden Erfindung stellt eine Gasdruckfeder gemäß Anspruch 1 bereit, die die technische Aufgabe löst. Ebenso wird die Aufgabe durch ein Herstellungsverfahren gemäß Anspruch 8 und ein Antriebssystem gemäß Anspruch 10 gelöst. Vorteilhafte Ausgestaltungen ergeben sich aus den abhängigen Ansprüchen.

### Beschreibung der Ausführungsarten

Eine erfindungsgemäße Gasdruckfeder umfasst zumindest einen Arbeitszylinder, der einen mit einem Arbeitsgas gefüllten inneren Arbeitsraum umschließt. Der Arbeitszylinder ist beispielsweise im Wesentlichen hohlzylindrisch geformt und/oder koaxial zu der weiter unten definierten Hubachse angeordnet und/oder umschließt den Arbeitsraum bis auf eine Anzahl von Verbindungen zu dem weiter unten beschriebenen äußeren Arbeitsraum für das Arbeitsgas gasdicht. Das Arbeitsgas ist beispielsweise Stickstoff oder ein anderes zur Füllung von Gasdruckfedern bekanntes Gas. Der Arbeitszylinder ist vorzugsweise einstückig, sodass die Gasdruckfeder möglichst einfach herstellbar ist.

Die Gasdruckfeder umfasst zumindest einen in dem inneren Arbeitsraum entlang einer Hubachse verschieblich gelagerten Arbeitskolben. Der Arbeitskolben kann wie bei Gasdruckfedern üblich den Arbeitsraum in zwei Kammern teilen und/oder mit einer Kolbenstange verbunden sein, die eine Bewegung eines mit der Gasdruckfeder verbundenen Bauteils relativ zu dem Arbeitszylinder auf den Arbeitskolben überträgt.

Die Gasdruckfeder umfasst zumindest einen Ausgleichszylinder, der den Arbeitszylinder zumindest über eine Teillänge des Arbeitszylinders entlang der Hubachse, insbesondere für das Arbeitsgas gasdicht, umschließt. Der Ausgleichszylinder ist beispielsweise rotationssymmetrisch zur Hubachse und/oder umschließt den Arbeitszylinder über seine gesamte Länge entlang der Hubachse oder sogar darüber hinaus, sodass der Ausgleichszylinder entlang der Hubachse zumindest einen Überstand über den Arbeitszylinder bildet. Der Ausgleichszylinder ist beispielsweise im Wesentlichen hohlzylindrisch geformt. Der Ausgleichszylinder ist vorzugsweise einstückig, sodass die Gasdruckfeder möglichst einfach herstellbar ist.

Die Gasdruckfeder umfasst zumindest ein in zumindest einem Ausgleichsraum, der sich zumindest radial zur Hubachse zwischen dem Arbeitszylinder und dem Ausgleichszylinder befindet, angeordnetes, sich bei Temperaturerhöhung ausdehnendes Ausgleichsmedium. Das Ausgleichsmedium füllt den Ausgleichsraum vorzugsweise aus.

Das Ausgleichsmedium ist vorzugsweise ein Dehnstoff, beispielsweise ein Dehnwachs, insbesondere eine Mischung aus Paraffinen und/oder Alkanen, ein Öl oder ein Zweiphasen-Medium, wobei das Ausgleichsmedium insbesondere so wie in EP 1 795 777 A1 oder DE 10 2020 113 749 A1 beschrieben ausgestaltet sein kann, woraus sich die dort genannten Vorteile ergeben.

Die Gasdruckfeder umfasst zumindest einen zumindest radial zur Hubachse zwischen dem Arbeitszylinder und dem Ausgleichszylinder angeordneten äußeren Arbeitsraum, wobei der äußere Arbeitsraum gasleitend mit dem inneren Arbeitsraum verbunden ist. Der äußere Arbeitsraum ist zum Beispiel im Wesentlichen hohlzylindrisch geformt und/oder koaxial zur Hubachse angeordnet. Der äußere Arbeitsraum ist über eine Anzahl von Öffnungen, insbesondere Bohrungen radial zur Hubachse, durch eine Mantelwand des Arbeitszylinders gasleitend mit dem inneren Arbeitsraum verbunden. Die Mantelwand läuft vorzugsweise um die Hubachse um. Eine Verbindung des äußeren Arbeitsraums mit dem inneren Arbeitsraum durch die Mantelwand hat den Vorteil, dass der äußere Arbeitsraum bezogen auf die Hubachse vollständig neben dem inneren Arbeitsraum oder den inneren Arbeitsraum umschließend angeordnet sein kann. Daraus ergibt sich vorteilhafterweise eine besonders geringe Länge der Gasdruckfeder entlang der Hubachse. Die quer zur Hubachse ausgerichteten Stirnwände des Arbeitszylinders sind vorzugsweise für das Arbeitsgas geschlossen.

Die Gasdruckfeder umfasst zumindest einen den Arbeitszylinder radial zur Hubachse umschließenden Ausgleichskolben, wobei der Ausgleichskolben entlang der Hubachse verschieblich gelagert ist, den äußeren Arbeitsraum zumindest an einer Seite quer zur Hubachse begrenzt und von einem Druck des Arbeitsmediums und einem Druck des Ausgleichsmediums in einem das Volumen des äußeren Arbeitsraums vergrößernden Sinne beaufschlagt ist.

Der Ausgleichskolben ist beispielsweise hohlzylindrisch geformt und/oder koaxial zur Hubachse angeordnet. Der Ausgleichskolben ist vorzugsweise einstückig, sodass die Gasdruckfeder möglichst einfach herstellbar ist. Der Ausgleichskolben ist vorzugsweise vollständig in dem Ausgleichszylinder angeordnet. Daraus ergibt sich der Vorteil, dass sich die entlang der Hubachse gemessene Länge der Gasdruckfeder bei einer Verschiebung des Ausgleichskolbens entlang der Hubachse nicht ändert. Die Länge ist also nicht temperaturabhängig.

Bei einer Temperaturerhöhung dehnt sich das Ausgleichsmedium aus und verschiebt dadurch den Ausgleichskolben so entlang der Hubachse, dass sich der äußere Arbeitsraum vergrößert. Dadurch vergrößert sich das dem Arbeitsgas im inneren und äußeren Arbeitsraum zur Verfügung stehende Volumen, was einem Druckanstieg des Arbeitsgases durch die Temperaturerhöhung entgegenwirkt. Durch eine geeignete Wahl des Ausgleichsmediums und/oder der geometrischen Ausgestaltung der Gasdruckfeder kann somit eine Temperaturabhängigkeit des Drucks des Arbeitsgases und der daraus resultierenden Federkraft der Gasdruckfeder verringert oder sogar vollständig kompensiert werden. Insbesondere kann eine deutlich bessere Kompensierung erreicht werden als mit einem Federbein.

Die erfindungsgemäße Anordnung des äußeren Arbeitsraums radial zur Hubachse zwischen dem Arbeitszylinder und dem Ausgleichszylinder hat den besonderen Vorteil, dass keine Verlängerung der Baulänge der Gasdruckfeder entlang der Hubachse gegenüber einer Gasdruckfeder ohne äußeren Arbeitsraum notwendig ist. Dadurch kann eine deutlich geringere Baulänge der Gasdruckfeder erreicht werden als gemäß EP 1 795 777 A2, wodurch die Gasdruckfeder vielseitiger einsetzbar ist.

Die Gasdruckfeder umfasst vorzugsweise zumindest ein in zumindest einem Rückstellraum, der zumindest radial zur Hubachse zwischen dem Arbeitszylinder und dem Ausgleichszylinder angeordnet ist, angeordnetes Rückstellmedium, wobei der Ausgleichskolben von einem Druck des Rückstellmediums in einem das Volumen des äußeren Arbeitsraums verkleinernden Sinne beaufschlagt ist. Das Rückstellmedium füllt den Rückstellraum vorzugsweise aus.

Der Rückstellraum ist beispielsweise rotationssymmetrisch zur Hubachse ausgestaltet. Der äußere Arbeitsraum ist vorzugsweise entlang der Hubachse zwischen dem Ausgleichsraum und dem Rückstellraum angeordnet. Der Rückstellraum ist vorzugsweise an einem Ende der Gasdruckfeder und der Ausgleichsraum an dem dazu gegenüberliegenden Ende der Gasdruckfeder entlang der Hubachse angeordnet. Durch eine Anordnung des äußeren Arbeitsraums zwischen Ausgleichsraum und Rückstellraum können das Ausgleichsmedium und das Rückstellmedium auf besonders einfache Weise zueinander gegenläufig auf das Volumen des äußeren Arbeitsraums wirken, sodass eine Temperaturabhängigkeit der Federkraft der Gasdruckfeder sowohl bei einer Erwärmung als auch bei einer Abkühlung kompensiert wird.

Das Rückstellmedium stellt vorteilhafterweise sicher, dass sich bei einem Zusammenziehen des Ausgleichsmediums bei sinkender Temperatur der Ausgleichskolben so bewegt, dass der äußere Arbeitsraum verkleinert wird. Dadurch steht dem Arbeitsgas im inneren und äußeren Arbeitsraum ein kleineres Volumen zur Verfügung, was einer Verringerung des Drucks des Arbeitsgases durch die sinkende Temperatur entgegenwirkt. Idealerweise wird der Ausgleichskolben durch das Ausgleichsmedium, das Arbeitsgas und das Rückstellmedium bei Temperaturschwankungen reversibel bewegt, sodass eine Temperaturabhängigkeit der Federkraft der Gasfeder dauerhaft kompensiert wird.

Die erfindungsgemäße Anordnung des Rückstellraums radial zur Hubachse zwischen dem Arbeitszylinder und dem Ausgleichszylinder hat den besonderen Vorteil, dass keine Verlängerung der Baulänge der Gasdruckfeder entlang der Hubachse gegenüber einer Gasdruckfeder ohne Rückstellraum notwendig ist. Dadurch kann eine deutlich geringere Baulänge der Gasdruckfeder erreicht werden als gemäß EP 1 795 777 A2, wodurch die Gasdruckfeder vielseitiger einsetzbar ist.

Die Gasdruckfeder umfasst vorzugsweise zumindest einen durch den Druck des Ausgleichsmediums aus dem Ausgleichsraum entlang der Hubachse gegen den Ausgleichskolben austreibbaren Stößel.

Der Stößel kann beispielsweise hohlzylindrisch geformt und/oder koaxial zur Hubachse angeordnet sein. Der Stößel hat vorzugsweise quer zur Hubachse eine kleinere Querschnittsfläche als der Ausgleichskolben. Dadurch bewirkt eine gegebene Volumenänderung des Ausgleichsmediums eine weitere Verschiebung des Ausgleichskolbens als ohne Stößel, sodass eine Temperaturabhängigkeit der Federkraft der Gasdruckfeder wirksamer kompensiert werden kann.

Der Stößel kann vorteilhafterweise den Ausgleichskolben mit dem Ausgleichsmedium verbinden, wenn der Ausgleichskolben auf der dem Ausgleichsraum abgewandten Seite des äußeren Arbeitsraums angeordnet ist. Dadurch kann eine Ausdehnung des Ausgleichsmediums auf besonders einfache Weise eine Vergrößerung des äußeren Arbeitsraums bewirken.

Der Ausgleichszylinder bildet vorzugsweise entlang der Hubachse zumindest einen Überstand über den Arbeitszylinder, wobei der zumindest eine Überstand einen Teilbereich des Ausgleichsraums und/oder des Rückstellraums enthält.

Indem ein Teilbereich des Ausgleichsraums und/oder des Rückstellraums in dem Überstand angeordnet ist, kann die Gasdruckfeder eine größere Menge an Ausgleichsmedium und/oder Rückstellmedium enthalten, ohne den Durchmesser der Gasdruckfeder quer zur Hubachse zu erhöhen. Dadurch kann die Gasdruckfeder an unterschiedliche Anforderungen bezüglich der von dem Ausgleichsmedium und/oder dem Rückstellmedium aufzubringenden Drücke und bezüglich des für die Gasdruckfeder zur Verfügung stehenden Bauraums angepasst werden.

Für praktische Anwendungen der Gasdruckfeder im Fahrzeugbau hat es sich als besonders vorteilhaft erwiesen, einen Teilbereich des Rückstellraums in dem Überstand anzuordnen. Dadurch kann der Rückstellraum ausreichend groß dimensioniert sein, damit der Druck des Rückstellmediums im Betrieb der Gasdruckfeder auf für übliche Dichtmittel und Materialien des Ausgleichszylinders und des Arbeitszylinders unkritische Werte, beispielsweise unter 250 bar, begrenzt wird.

Die Gasdruckfeder umfasst vorzugsweise eine an dem Arbeitskolben befestigte und an dem Arbeitszylinder entlang der Hubachse verschieblich gelagerte Kolbenstange, wobei der Überstand an dem der Kolbenstange entlang der Hubachse abgewandten Ende des Arbeitszylinders angeordnet ist. Daraus ergibt sich der Vorteil, dass eine Hubbewegung der Kolbenstange und ein Anschluss der Kolbenstange an andere Bauteile nicht durch den Überstand behindert werden.

Die Gasdruckfeder umfasst vorzugsweise eine an dem Arbeitskolben befestigte und an dem Arbeitszylinder entlang der Hubachse verschieblich gelagerte Kolbenstange, wobei der Rückstellraum an dem der Kolbenstange entlang der Hubachse abgewandten Ende des Arbeitszylinders angeordnet ist.

Typischerweise wird eine Gasdruckfeder hergestellt, indem der Arbeitskolben mit der der Kolbenstange abgewandten Seite voran in den Arbeitszylinder eingesetzt und das Arbeitsgas von der Seite, an der die Kolbenstange aus dem Arbeitszylinder ragt, in den Arbeitszylinder eingefüllt wird. In diesen Arbeitsablauf lassen sich ein Einfüllen eines, insbesondere gasförmigen, Rückstellmediums und eines, insbesondere wachsartigen, Ausgleichsmediums besonders einfach integrieren, wenn der Ausgleichsraum an der der Kolbenstange abgewandten Seite des Arbeitszylinders angeordnet ist.

Der äußere Arbeitsraum weist vorzugsweise quer zur Hubachse einen kleineren Durchmesser auf als der Ausgleichsraum und/oder der Rückstellraum. Dadurch steht im Ausgleichsraum und/oder im Rückstellraum ein ausreichend großes Volumen für das Ausgleichsmedium und/oder das Rückstellmedium zur Verfügung, um unter typischen Anwendungsbedingungen der Gasdruckfeder einen zuverlässigen Betrieb mit einer weitgehenden Kompensation der Temperaturabhängigkeit der Federkraft zu gewährleisten. Gleichzeitig ist die entlang der Hubachse gemessene Länge der Gasdruckfeder möglichst klein.

Der Ausgleichszylinder umschließt vorzugsweise den Ausgleichsraum, den äußeren Arbeitsraum und den Rückstellraum radial zur Hubachse, wobei ein quer zur Hubachse gemessener Durchmesser des Ausgleichszylinders in einem Bereich des Ausgleichsraums und/oder des Rückstellraums relativ zu einem Bereich des äußeren Arbeitsraums aufgeweitet ist. In dieser Ausgestaltung sind die unterschiedlichen Durchmesser von äußerem Arbeitsraum und Ausgleichsraum und/oder Rückstellraum besonders einfach herstellbar.

Insbesondere wird durch einen ausreichend großen Rückstellraum sichergestellt, dass der Druck des Rückstellmediums auf für übliche Dichtmittel und Materialien des Ausgleichszylinders und des Arbeitszylinders unkritische Werte, beispielsweise unter 250 bar, begrenzt bleibt. Ein ausreichend großer Ausgleichsraum stellt sicher, dass sich das Ausgleichsmedium bei einer Temperaturerhöhung genügend ausdehnt, um den äußeren Arbeitsraum so weit zu vergrößern, dass der Druck des Arbeitsgases nicht wesentlich ansteigt.

In einer Ausführungsform ist das Rückstellmedium ein Gas, insbesondere das Arbeitsgas. Ein Gas hat gegenüber einer mechanischen Feder die Vorteile einer geringeren Masse und eines geräuschfreien Betriebs. Die Verwendung des Arbeitsgases als Rückstellmedium vereinfacht die Herstellung der Gasdruckfeder, da nur ein Gas verwendet wird. Zusätzlich oder alternativ zu einem gasförmigen Rückstellmedium kann das Rückstellmedium eine mechanische Rückstellfeder in dem Rückstellraum umfassen.

Der Rückstellraum enthält vorzugsweise einen entlang der Hubachse verschieblich gelagerten Übersetzungskolben, wobei der Übersetzungskolben den Rückstellraum in einen Flüssigkeitsraum im Kontakt mit dem Ausgleichskolben und einen von dem Ausgleichskolben gasdicht getrennten Gasraum teilt.

Der Flüssigkeitsraum ist mit einer Hydraulikflüssigkeit, insbesondere einem Hydrauliköl, und der Gasraum mit dem als ein Gas, insbesondere als das Arbeitsgas, ausgestalteten Rückstellmedium gefüllt.

Eine Querschnittsfläche des Übersetzungskolbens quer zur Hubachse ist vorzugsweise größer, beispielsweise zweimal bis zehnmal größer, insbesondere fünfmal größer, als eine Querschnittsfläche des Ausgleichskolbens quer zur Hubachse. Dadurch wirken der Übersetzungskolben und der Ausgleichskolben zusammen mit der dazwischen befindlichen Hydraulikflüssigkeit als hydraulische Übersetzung. Mit der hydraulischen Übersetzung ist somit in dem Rückstellraum ein geringerer Druck notwendig, um das Ausgleichsmedium bei einer Abkühlung zu komprimieren, als ohne hydraulische Übersetzung. Dadurch werden den Rückstellraum begrenzende Dichtungen und Wände geschont.

Der Übersetzungskolben hat einen größeren oder kleineren Außendurchmesser quer zur Hubachse als der Ausgleichskolben oder den gleichen Außendurchmesser wie der Ausgleichskolben.

Der Übersetzungskolben ist vorzugsweise scheibenförmig ausgestaltet, mit einer Scheibenebene quer zur Hubachse ausgerichtet und/oder entlang der Hubachse vor dem der Kolbenstange abgewandten Ende des Arbeitszylinders angeordnet. Im Verhältnis zu einem ringförmig um den Arbeitszylinder angeordneten Ausgleichskolben kann ein scheibenförmiger Übersetzungskolben auch dann eine größere Querschnittsfläche haben, wenn der Übersetzungskolben keinen größeren Außendurchmesser als der Ausgleichskolben hat.

Die Erfindung betrifft ein Verfahren zur Herstellung einer erfindungsgemäßen Gasdruckfeder. Das Verfahren umfasst zumindest folgende Schritte:
a. Anordnen des Arbeitszylinders der Gasdruckfeder in dem Ausgleichszylinder der Gasdruckfeder;
b. Einfüllen des Rückstellmediums, des Ausgleichskolbens und des Ausgleichsmediums der Gasdruckfeder in einen Raum zwischen den Arbeitszylinder und den Ausgleichszylinder nach dem Anordnen;
c. Einbringen des Arbeitskolbens und des Arbeitsgases der Gasdruckfeder in den Arbeitszylinder nach dem Anordnen, und
d. gasdichtes Verschließen des Arbeitszylinders und des Ausgleichszylinders nach dem Einfüllen und dem Einbringen.

Das Verfahren umfasst vorzugsweise ein gleichzeitiges Einbringen des Arbeitsgases in den inneren und äußeren Arbeitsraum und Einfüllen des Arbeitsgases als Rückstellmedium in den Rückstellraum der Gasdruckfeder, insbesondere durch ein Rückschlagventil vom Arbeitsraum zum Rückstellraum, und ein Ablassen eines Teils des Arbeitsmediums aus dem inneren und äußeren Arbeitsraum nach dem Einbringen und Einfüllen.

Durch das gleichzeitige Einbringen und Einfüllen lässt sich die Montage der Gasdruckfeder beschleunigen und vereinfachen. Das Ablassen eines Teils des Arbeitsmediums aus dem Arbeitsraum sorgt dafür, dass das als Rückstellmedium dienende Arbeitsmedium im Rückstellraum einen höheren Druck hat als das Arbeitsmedium im inneren und äußeren Arbeitsraum. Dadurch kann das Rückstellmedium den Ausgleichskolben bei geringen Temperaturen gegen den Druck des Arbeitsmediums und des Ausgleichsmediums in eine Position mit minimalem Volumen des äußeren Arbeitsraums zurückstellen.

Das Verfahren umfasst vorzugsweise ein Aufweiten eines quer zur Hubachse gemessenen Durchmessers des Ausgleichszylinders in einem Bereich des Ausgleichsraums und/oder des Rückstellraums relativ zu einem Bereich des äußeren Arbeitsraums.

Die Erfindung betrifft ein Antriebssystem für eine Klappe mit
a. einer erfindungsgemäßen Gasdruckfeder zur Unterstützung der Klappe und
b. einem elektromechanischen Antrieb, beispielsweise einem Linearantrieb, insbesondere einem Spindelantrieb, zum Antrieb der Klappe.

Bei der Klappe kann es sich beispielsweise um eine Klappe eines Fahrzeugs, insbesondere um eine Motorhaube, eine Kofferraumklappe, eine Gepäckraumklappe oder eine Flügeltür, handeln.

Antriebssysteme für eine Klappe mit einer Gasdruckfeder zur Unterstützung der Klappe und einem elektromechanischen Antrieb zum Antrieb der Klappe sind im Stand der Technik bekannt. Bis auf die Verwendung einer erfindungsgemäßen anstelle einer gattungsgemäßen Gasdruckfeder kann das erfindungsgemäße Antriebssystem wie ein entsprechendes Antriebssystem aus dem Stand der Technik, beispielsweise aus DE 103 13 440 A1 oder DE 10 2008 045 903 A1, aufgebaut sein.

Die Gasdruckfeder des Antriebssystems dient dazu, die Klappe in einer beliebigen Stellung gegen die Schwerkraft zu halten, während der elektromechanische Antrieb dazu dient, die Klappe zu öffnen und zu schließen. Zusätzlich kann wie in DE 103 13 440 A1 und DE 10 2008 045 903 A1 eine manuelle Betätigung der Klappe vorgesehen sein.

Die Gasdruckfeder muss eine so hohe Federkraft aufweisen, dass sie die Klappe auch bei niedrigen Umgebungstemperaturen halten kann. Da die Federkraft bei üblichen Gasdruckfedern mit steigender Temperatur steigt, führt dies dazu, dass bei hohen Temperaturen von dem elektromechanischen Antrieb oder einem Bediener eine sehr hohe Kraft aufgebracht werden muss, um die Klappe zu schließen. Daher muss das Antriebssystem einen sehr kraftvollen elektromechanischen Antrieb umfassen, der teuer ist, viel Bauraum beansprucht und im Betrieb viel Energie verbraucht. Außerdem kommt es zu einem hohen Verschleiß des elektromechanischen Antriebs und von anderen mit der Klappe mechanisch verbundenen Teilen, beispielsweise Scharnieren.

Im Stand der Technik werden diese Probleme durch Verwendung eines Federbeins anstelle der Gasdruckfeder umgangen (z.B. DE 10 2008 045 903 A1, Abs. [0021]). Ein Federbein hat zwar eine nahezu temperaturunabhängige Federkraft, ist aber größer, schwerer und teurer als eine Gasdruckfeder mit vergleichbarer Federkraft.

Durch die Verwendung einer erfindungsgemäßen, temperaturkompensierten Gasdruckfeder anstelle einer fachüblichen Gasdruckfeder wird somit ein besonders kostengünstiges, einfach herstellbares, langlebiges, kompaktes, energiesparendes und einfach zu bedienendes Antriebssystem für die Klappe geschaffen.

### Kurze Beschreibung der Zeichnungen

Weitere Vorteile, Ziele und Eigenschaften der Erfindung werden anhand nachfolgender Beschreibung und anliegender Zeichnung erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt einen schematischen Längsschnitt einer erfindungsgemäßen Gasdruckfeder.
Figur 2 zeigt einen schematischen Längsschnitt einer weiteren erfindungsgemäßen Gasdruckfeder entlang ihrer Hubachse.

### Fig.1

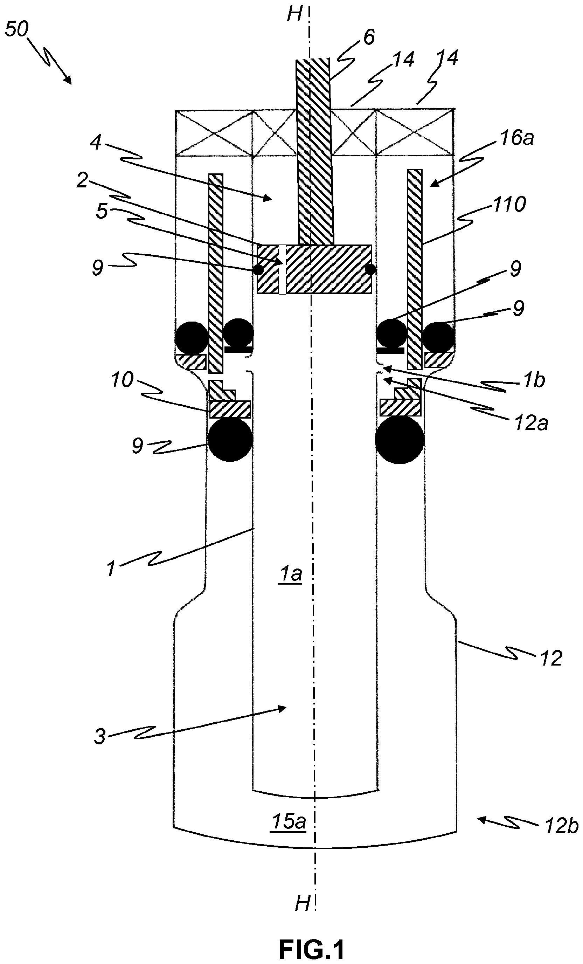

Figur 1 zeigt einen schematischen Längsschnitt einer erfindungsgemäßen Gasdruckfeder 50 entlang ihrer Hubachse H.

Die Gasdruckfeder 50 umfasst einen Arbeitszylinder 1, der einen mit einem nicht dargestellten Arbeitsgas, z.B. Stickstoff, gefüllten inneren Arbeitsraum 1a umschließt. Der Arbeitszylinder 1 ist beispielsweise im Wesentlichen hohlzylindrisch geformt und koaxial zur Hubachse H angeordnet. Der Arbeitszylinder 1 hat beispielsweise eine Länge entlang der Hubachse H von 230 mm und quer zur Hubachse einen Innendurchmesser von 16 mm und einen Außendurchmesser von 19 mm.

Die Gasdruckfeder 50 umfasst einen in dem inneren Arbeitsraum 1a entlang einer Hubachse H verschieblich gelagerten Arbeitskolben 2. Der Arbeitskolben 2 ist beispielsweise im Wesentlichen zylindrisch geformt und koaxial zur Hubachse H angeordnet.

Der Arbeitskolben 2 unterteilt den Innenraum 1a des Arbeitszylinders 1 vorzugsweise in eine erste Arbeitskammer 3 und eine zweite Arbeitskammer 4, die entlang der Hubachse H hintereinander liegen. Der Arbeitskolben 2 kann eine, insbesondere ringförmige, Dichtung 9 zu einer Mantel-Innenfläche des Arbeitszylinders 1 aufweisen, sodass das Arbeitsmedium den Arbeitskolben 2 bei einer Verschiebung des Arbeitskolbens 2 entlang der Hubachse H nicht umströmen kann.

Der Arbeitskolben 2 kann eine die erste Arbeitskammer 3 mit der zweiten Arbeitskammer 4 verbindende Drosselbohrung 5 aufweisen, um einen kontrollierten Druckausgleich zwischen der ersten Arbeitskammer 3 und der zweiten Arbeitskammer 4 zu ermöglichen.

An dem Arbeitskolben 2 ist vorzugsweise eine Kolbenstange 6 befestigt, die entlang der Hubachse H durch die zweite Arbeitskammer 4 und, beispielsweise durch ein den Arbeitszylinder 1 verschließendes Verschlusselement 14, aus der Gasdruckfeder 50 herausgeführt ist.

Die Gasdruckfeder 50 umfasst einen Ausgleichszylinder 12, der den Arbeitszylinder 1 über eine Teillänge des Arbeitszylinders 1 entlang der Hubachse H umschließt. Der Ausgleichszylinder 12 kann im Wesentlichen rotationssymmetrisch zur Hubachse H geformt sein. Der Ausgleichszylinder 12 kann den Arbeitszylinder 1 über die gesamte Länge des Arbeitszylinders 1 entlang der Hubachse H umschließen und zusätzlich entlang der Hubachse H, insbesondere an einem der Kolbenstange 6 abgewandten Ende des Arbeitszylinders 1 einen Überstand 12b über den Arbeitszylinder 1 bilden. Der Überstand kann beispielsweise eine Länge von 20 mm entlang der Längsachse haben.

Die Gasdruckfeder 50 umfasst ein in einem Ausgleichsraum 16a radial zur Hubachse H zwischen dem Arbeitszylinder 1 und dem Ausgleichszylinder 12 angeordnetes, sich bei Temperaturerhöhung ausdehnendes Ausgleichsmedium (nicht dargestellt). Das Ausgleichsmedium füllt den Ausgleichsraum vorzugsweise aus. Das Ausgleichsmedium ist beispielsweise ein Dehnwachs. Der Ausgleichsraum 16a ist beispielsweise im Wesentlichen rotationssymmetrisch zur Hubachse H geformt. Der Ausgleichsraum 16a hat beispielsweise eine Länge von 113 mm entlang der Hubachse.

Die Gasdruckfeder 50 umfasst einen radial zur Hubachse H zwischen dem Arbeitszylinder 1 und dem Ausgleichszylinder 12 angeordneten äußeren Arbeitsraum 12a, wobei der äußere Arbeitsraum 12a gasleitend, beispielsweise durch eine Anzahl von Öffnungen 1b durch eine Mantelwand des Arbeitszylinders 1, mit dem inneren Arbeitsraum 1a, insbesondere mit der ersten Arbeitskammer 3, verbunden ist. Der äußere Arbeitsraum 12a ist beispielsweise im Wesentlichen rotationssymmetrisch zur Hubachse H geformt.

Die Gasdruckfeder 50 umfasst einen den Arbeitszylinder 1 radial zur Hubachse H umschließenden Ausgleichskolben 10, wobei der Ausgleichskolben 10 entlang der Hubachse H verschieblich gelagert ist, den äußeren Arbeitsraum 12a an einer Seite quer zur Hubachse H begrenzt und von einem Druck des Arbeitsmediums und einem Druck des Ausgleichsmediums in einem das Volumen des äußeren Arbeitsraums 12a vergrößernden Sinne beaufschlagt ist. Der Ausgleichskolben 10 ist beispielsweise im Wesentlichen hohlzylindrisch geformt und koaxial zur Hubachse H angeordnet. Der Ausgleichskolben ist beispielsweise über eine Ausgleichsstrecke von 84 mm entlang der Hubachse H verschieblich.

Die Gasdruckfeder 50 umfasst ein in einem Rückstellraum 15a radial zur Hubachse H zwischen dem Arbeitszylinder 1 und dem Ausgleichszylinder 12 angeordnetes Rückstellmedium (nicht dargestellt), wobei der Ausgleichskolben 10 von einem Druck des Rückstellmediums in einem das Volumen des äußeren Arbeitsraums 12a verkleinernden Sinne beaufschlagt ist. Das Rückstellmedium ist beispielsweise ein Gas, insbesondere das Arbeitsgas.

Der Rückstellraum 15a ist beispielsweise im Wesentlichen rotationssymmetrisch zur Hubachse H geformt. Der Rückstellraum 15a kann teilweise in einem Überstand 12b des Ausgleichszylinders 12 entlang der Hubachse H über den Arbeitszylinder 1 hinaus angeordnet sein. Der Rückstellraum 15a kann beispielsweise bei maximaler Verschiebung des Ausgleichskolbens 10 auf den Rückstellraum 15a zu eine Mindestlänge von 60 mm entlang der Hubachse H aufweisen.

Vorzugsweise sind der Ausgleichsraum 16a, der äußere Arbeitsraum 12a und der Rückstellraum 15a entlang der Hubachse H hintereinander angeordnet, wobei insbesondere der Rückstellraum 15a an dem der Kolbenstange 6 abgewandten Ende der Gasdruckfeder 50, der Ausgleichsraum 16a an dem Ende der Gasdruckfeder 50, an dem die Kolbenstange 6 aus der Gasdruckfeder 50 heraus geführt ist, und der äußere Arbeitsraum 12a zwischen dem Rückstellraum 15a und dem Ausgleichsraum 16a angeordnet sein können.

Der Ausgleichsraum 16a und der Rückstellraum 15a können quer zur Hubachse einen größeren Durchmesser aufweisen als der äußere Arbeitsraum 12a. Beispielsweise kann der Ausgleichsraums 16a einen Außendurchmesser von 30 mm, der Rückstellraum 15a einen Außendurchmesser von 25 mm bis 30 mm und der äußere Arbeitsraum 12a einen Außendurchmesser von 25 mm aufweisen.

Der Ausgleichsraum 16a und der Rückstellraum 15a können gegen den äußeren Arbeitsraum 12a mit jeweils zumindest einer Dichtung 9, beispielsweise mit jeweils zumindest einem O-Ring, abgedichtet sein.

Der Ausgleichsraum 16a kann an einem dem äußeren Arbeitsraum 12a abgewandten Ende mit einem Verschlusselement 14, insbesondere mit einer Verschlussscheibe, verschlossen sein. Der Arbeitszylinder 1 und der Ausgleichsraum 16a können insbesondere mit einem gemeinsamen Verschlusselement 14 verschlossen sein.

Die Gasdruckfeder 50 umfasst vorzugsweise einen durch den Druck des Ausgleichsmediums aus dem Ausgleichsraum 16a entlang der Hubachse H gegen den Ausgleichskolben 10 austreibbaren Stößel 110. Der Stößel 110 ist beispielsweise im Wesentlichen hohlzylindrisch geformt und koaxial zur Hubachse H angeordnet. Der Stößel 110 kann aus dem Ausgleichsraum 16a durch den äußeren Arbeitsraum 12a hindurch bis zum Ausgleichskolben 10 führen und insbesondere an dem Ausgleichskolben 10 befestigt oder einstückig damit ausgebildet sein.

In Figur 1 ist die Gasdruckfeder 50 bei einer geringen Temperatur gezeigt, bei der der äußere Arbeitsraum 12a ein kleines Volumen hat. Bei einer Erwärmung der Gasdruckfeder 50 dehnt sich das Ausgleichsmedium in dem Ausgleichraum 16a aus und verschiebt dadurch den Ausgleichskolben 10 entlang der Hubachse H so, dass sich das Volumen des äußeren Arbeitsraums 12a vergrößert (in Fig. 1 nach unten). Dadurch kann eine durch die Erwärmung bewirkte Druckerhöhung des Arbeitsgases in dem inneren Arbeitsraum 1a und äußeren Arbeitsraum 12a kompensiert werden.

Bei einer Abkühlung der Gasdruckfeder 50 zieht sich das Ausgleichsmedium in dem Ausgleichsraum 16a zusammen, sodass der Druck des Rückstellmediums in dem Rückstellraum 15a den Ausgleichskolben 10 so verschiebt, dass sich das Volumen des äußeren Arbeitsraums 12a verringert (in Fig.1 nach oben). Dadurch kann eine durch die Abkühlung bewirkte Druckverringerung des Arbeitsgases in dem inneren Arbeitsraum 1a und äußeren Arbeitsraum 12a kompensiert werden.

### Fig.2

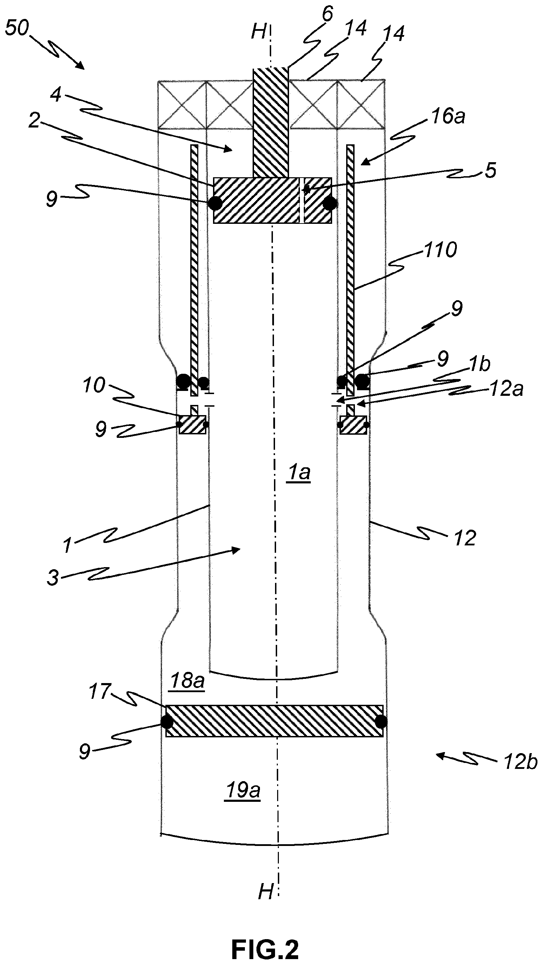

Figur 2 zeigt einen schematischen Längsschnitt einer weiteren erfindungsgemäßen Gasdruckfeder 50 entlang ihrer Hubachse H.

Bereits in Figur 1 gezeigte Merkmale der Gasdruckfeder 50 sind mit den gleichen Bezugszeichen wie in Figur 1 versehen und können ebenso ausgestaltet sein wie zu Figur 1 beschrieben.

Der Rückstellraum 15a der in Figur 2 gezeigten Gasdruckfeder 50 enthält einen entlang der Hubachse H verschieblich gelagerten Übersetzungskolben 17 enthält, wobei der Übersetzungskolben 17 den Rückstellraum 15a, beispielsweise mit Hilfe einer Dichtung 9, in einen Flüssigkeitsraum 18a im Kontakt mit dem Ausgleichskolben 10 und einen von dem Ausgleichskolben 10 gasdicht getrennten Gasraum 19a teilt.

In dieser Ausgestaltung ist der Flüssigkeitsraum 18a mit einer Hydraulikflüssigkeit und der Gasraum 19a mit dem als Gas ausgestalteten Rückstellmedium gefüllt.

Eine Querschnittsfläche des Übersetzungskolbens 17 quer zur Hubachse H ist größer ist als eine Querschnittsfläche des Ausgleichskolbens 10 quer zur Hubachse H, sodass der Übersetzungskolben 17 mit dem Ausgleichskolben 10 und der dazwischen angeordneten Hydraulikflüssigkeit eine hydraulische Übersetzung bildet.

Der Übersetzungskolben 17 hat beispielsweise einen größeren Außendurchmesser quer zur Hubachse H als der Ausgleichskolben 10.

Der Übersetzungskolben 17 ist beispielsweise scheibenförmig ausgestaltet, mit einer Scheibenebene quer zur Hubachse H ausgerichtet und entlang der Hubachse H vor dem der Kolbenstange 6 abgewandten Ende des Arbeitszylinders 1 angeordnet.

**Liste der Bezugszeichen**

| | | | |
|---|---|---|---|
| 1 | Arbeitszylinder | 12 | Ausgleichszylinder |
| 1a | Innerer Arbeitsraum | 12a | Äußerer Arbeitsraum |
| 1b | Öffnung | 12b | Überstand |
| 2 | Arbeitskolben | 14 | Verschlusselement |
| 3 | Erste Arbeitskammer | 15a | Rückstellraum |
| 4 | Zweite Arbeitskammer | 16a | Ausgleichsraum |
| 5 | Drosselbohrung | 17 | Übersetzungskolben |
| 6 | Kolbenstange | 18a | Flüssigkeitsraum |
| 9 | Dichtung | 19a | Gasraum |
| 10 | Ausgleichskolben | 50 | Gasdruckfeder |
| | | 110 | Stößel |
| | | H | Hubachse |

## Patentansprüche

1. Gasdruckfeder (50) mit
a. einem Arbeitszylinder (1), der einen mit einem Arbeitsgas gefüllten inneren Arbeitsraum (1a) umschließt,
b. einem in dem inneren Arbeitsraum (1a) entlang einer Hubachse (H) verschieblich gelagerten Arbeitskolben (2),
c. einem Ausgleichszylinder (12), der den Arbeitszylinder (1) zumindest über eine Teillänge des Arbeitszylinders (1) entlang der Hubachse (H) umschließt, und
d. einem in einem Ausgleichsraum (16a) radial zur Hubachse (H) zwischen dem Arbeitszylinder (1) und dem Ausgleichszylinder (12) angeordneten, sich bei Temperaturerhöhung ausdehnenden Ausgleichsmedium,
**gekennzeichnet durch**
e. einen radial zur Hubachse (H) zwischen dem Arbeitszylinder (1) und dem Ausgleichszylinder (12) angeordneten äußeren Arbeitsraum (12a),
i. wobei der äußere Arbeitsraum (12a) durch eine Anzahl von Öffnungen (1b) durch eine Mantelwand des Arbeitszylinders (1) gasleitend mit dem inneren Arbeitsraum (1a) verbunden ist,
f. einen den Arbeitszylinder (1) radial zur Hubachse (H) umschließenden Ausgleichskolben (10), wobei der Ausgleichskolben (10)
i. entlang der Hubachse (H) verschieblich gelagert ist,
ii. den äußeren Arbeitsraum (12a) an einer Seite quer zur Hubachse (H) begrenzt und
iii. von einem Druck des Arbeitsmediums und einem Druck des Ausgleichsmediums in einem das Volumen des äußeren Arbeitsraums (12a) vergrößernden Sinne beaufschlagt ist, und
g. ein in einem Rückstellraum (15a) radial zur Hubachse (H) zwischen dem Arbeitszylinder (1) und dem Ausgleichszylinder (12) angeordnetes Rückstellmedium, wobei der Ausgleichskolben (10) von einem Druck des Rückstellmediums in einem das Volumen des äußeren Arbeitsraums (12a) verkleinernden Sinne beaufschlagt ist.

2. Gasdruckfeder (50) nach Anspruch 1,
**dadurch gekennzeichnet, dass**
der Ausgleichskolben (10) vollständig in dem Ausgleichszylinder (12) angeordnet ist.

3. Gasdruckfeder (50) nach Anspruch 1 oder 2,
**dadurch gekennzeichnet, dass**
der äußere Arbeitsraum (12a) entlang der Hubachse (H) zwischen dem Ausgleichsraum (16a) und dem Rückstellraum (15a) angeordnet ist.

4. Gasdruckfeder (50) nach einem der Ansprüche 1 bis 3,
**gekennzeichnet durch**
einen durch den Druck des Ausgleichsmediums aus dem Ausgleichsraum (16a) entlang der Hubachse (H) gegen den Ausgleichskolben (10) austreibbaren Stößel (110), wobei der Stößel (110) quer zur Hubachse (H) eine kleinere Querschnittsfläche als der Ausgleichskolben (10) hat.

5. Gasdruckfeder (50) nach einem der Ansprüche 1 bis 4,
**dadurch gekennzeichnet, dass**
der Ausgleichszylinder (12) entlang der Hubachse (H) zumindest einen Überstand (12b) über den Arbeitszylinder (1) bildet, wobei der zumindest eine Überstand (12b) einen Teilbereich des Rückstellraums (15a) enthält.

6. Gasdruckfeder (50) nach Anspruch 5,
**gekennzeichnet durch**
eine an dem Arbeitskolben (2) befestigte und an dem Arbeitszylinder (1) entlang der Hubachse (H) verschieblich gelagerte Kolbenstange (6), wobei der Überstand (12b) an dem der Kolbenstange (6) entlang der Hubachse (H) abgewandten Ende des Arbeitszylinders (1) angeordnet ist.

7. Gasdruckfeder (50) nach einem der Ansprüche 1 bis 6,
**dadurch gekennzeichnet, dass**
der äußere Arbeitsraum (12a) quer zur Hubachse (H) einen kleineren Durchmesser aufweist als der Ausgleichsraum (16a) und/oder der Rückstellraum (15a).

8. Gasdruckfeder (50) nach Anspruch 7,
**dadurch gekennzeichnet, dass**
der Ausgleichszylinder (12) den Ausgleichsraum (16a), den äußeren Arbeitsraum (12a) und den Rückstellraum (15a) radial zur Hubachse (H) umschließt, wobei ein quer zur Hubachse (H) gemessener Durchmesser des Ausgleichszylinders (12) in einem Bereich des Ausgleichsraums (16a) und/oder des Rückstellraums (15a) relativ zu einem Bereich des äußeren Arbeitsraums (12a) aufgeweitet ist.

9. Gasdruckfeder (50) nach einem der Ansprüche 1 bis 8,
**dadurch gekennzeichnet, dass**
das Rückstellmedium ein Gas, bevorzugt das Arbeitsgas, ist.

10. Gasdruckfeder (50) nach einem der Ansprüche 1 bis 9,
**dadurch gekennzeichnet, dass**
a. der Rückstellraum (15a) einen entlang der Hubachse (H) verschieblich gelagerten Übersetzungskolben (17) enthält,
b. wobei der Übersetzungskolben (17) den Rückstellraum (15a) in einen Flüssigkeitsraum (18a) im Kontakt mit dem Ausgleichskolben (10) und einen von dem Ausgleichskolben (10) gasdicht getrennten Gasraum (19a) teilt,
c. wobei der Flüssigkeitsraum (18a) mit einer Hydraulikflüssigkeit und der Gasraum (19a) mit dem als Gas ausgestalteten Rückstellmedium gefüllt ist, und
d. wobei eine Querschnittsfläche des Übersetzungskolbens (17) quer zur Hubachse (H) größer ist als eine Querschnittsfläche des Ausgleichskolbens (10) quer zur Hubachse (H).

11. Verfahren zur Herstellung der Gasdruckfeder (50) nach einem der Ansprüche 1 bis 10,
**gekennzeichnet durch folgende Schritte:**
a. Anordnen des Arbeitszylinders (1) der Gasdruckfeder (50) in dem Ausgleichszylinder (12) der Gasdruckfeder (50),
b. Einfüllen des Rückstellmediums, des Ausgleichskolbens (10) und des Ausgleichsmediums der Gasdruckfeder (50) in einen Raum zwischen den Arbeitszylinder (1) und den Ausgleichszylinder (12) nach dem Anordnen,
c. Einbringen des Arbeitskolbens (2) und des Arbeitsgases der Gasdruckfeder (50) in den Arbeitszylinder (1) nach dem Anordnen und
d. gasdichtes Verschließen des Arbeitszylinders (1) und des Ausgleichszylinders (12) nach dem Einfüllen und dem Einbringen.

12. Verfahren nach Anspruch 11,
**gekennzeichnet durch folgende Schritte:**
a. gleichzeitiges Einbringen des Arbeitsgases in den inneren und äußeren Arbeitsraum (1a, 12a) und Einfüllen des Arbeitsgases als Rückstellmedium in den Rückstellraum (15a) der Gasdruckfeder (50), bevorzugt durch ein Rückschlagventil vom Arbeitsraum (1a) zum Rückstellraum (15a), und
b. Ablassen eines Teils des Arbeitsmediums aus dem inneren und äußeren Arbeitsraum (1a, 12a) nach dem Einbringen und Einfüllen.

13. Verfahren nach Anspruch 11 oder 12,
**gekennzeichnet durch folgenden Schritt:**
Aufweiten eines quer zur Hubachse (H) gemessenen Durchmessers des Ausgleichszylinders (12) in einem Bereich des Ausgleichsraums (16a) und/oder des Rückstellraums (15a) relativ zu einem Bereich des äußeren Arbeitsraums (12a).

14. Antriebssystem für eine Klappe mit
a. der Gasdruckfeder (50) nach einem der Ansprüche 1 bis 10 zur Unterstützung der Klappe und
b. einem elektromechanischen Antrieb, bevorzugt einem Spindelantrieb, zum Antrieb der Klappe.

## Claims

1. Gas strut (50), comprising
a. a working cylinder (1) which encloses an inner working space (1a) filled with a working gas,
b. a working piston (2) mounted displaceably along a stroke axis (H) in the inner working space (1a),
c. an equalising cylinder (12) which encloses the working cylinder (1) at least over a partial length of the working cylinder (1) along the stroke axis (H),
d. an equalising medium which expands upon an increase in temperature, arranged in an equalising space (16a) radially to the stroke axis (H) between the working cylinder (1) and the equalising cylinder (12),
**characterised by**
e. an outer working space (12a) arranged radially to the stroke axis (H) between the working cylinder (1) and the equalising cylinder (12),
i. wherein the outer working space (12a) is connected to the inner working space (1a) in a gas-conducting manner by a number of openings (1b) through a lateral wall of the working cylinder (1),
f. an equalising piston (10) enclosing the working cylinder (1) radially to the stroke axis (H), wherein the equalising piston (10)
i. is mounted displaceably along the stroke axis (H),
ii. delimits the outer working space (12a) on one side transversely to the stroke axis (H), and
iii. is pressurised by a pressure of the working medium and a pressure of the equalising medium so as to increase the volume of the outer working space (12a), and
g. a restoring medium arranged in a restoring space (15a) radially to the stroke axis (H) between the working cylinder (1) and the equalising cylinder (12), wherein the equalising piston (10) is pressurised by a pressure of the restoring medium so as to decrease the volume of the outer working space (12a).

2. Gas strut (50) according to claim 1,
**characterised in that**
the equalising piston (10) is arranged completely in the equalising cylinder (12).

3. Gas strut (50) according to claim 1 or 2,
**characterised in that**
the outer working space (12a) is arranged along the stroke axis (H) between the equalising space (16a) and the restoring space (15a).

4. Gas strut (50) according to one of claims 1 to 3,
**characterised by**
a tappet (110) which can be expelled out of the equalising space (16a) along the stroke axis (H) towards the equalising piston (10) by the pressure of the equalising medium, wherein the tappet (110) has a smaller cross-sectional area transversely to the stroke axis (H) than the equalising piston (10).

5. Gas strut (50) according to one of claims 1 to 4,
**characterised in that**
the equalising cylinder (12) forms along the stroke axis (H) at least one excess length (12b) over the working cylinder (1), wherein the at least one excess length (12b) contains a partial of the restoring space (15a).

6. Gas strut (50) according to claim 4,
**characterised by**
a piston rod (6) fastened to the working piston (2) and mounted displaceably along the stroke axis (H) in the working cylinder (1), wherein the excess length (12b) is arranged at that end of the working cylinder (1) which is remote from the piston rod (6) along the stroke axis (H).

7. Gas strut (50) according to one of claims 1 to 6,
**characterised in that**
the outer working space (12a) has a smaller diameter transversely to the stroke axis (H) than the equalising space (16a) and/or the restoring space (15a).

8. Gas strut (50) according to claim 7,
**characterised in that**
the equalising cylinder (12) encloses the equalising space (16a), the outer working space (12a) and the restoring space (15a) radially to the stroke axis (H), wherein a diameter of the equalising cylinder (12) measured transversely to the stroke axis (H) is widened in a region of the equalising space (16a) and/or of the restoring space (15a) relatively to a region of the outer working space (12a).

9. Gas strut (50) according to one of claims 1 to 8,
**characterised in that**
the restoring medium is a gas, preferably the working gas.

10. Gas strut (50) according to one of claims 1 to 9,
**characterised in that**
a. the restoring space (15a) contains a multiplication piston (17) mounted displaceably along the stroke axis (H),
b. wherein the multiplication piston (17) divides the restoring space (15a) into a liquid space (18a) in contact with the equalising piston (10) and a gas space (19a) separated in a gas-tight manner from the equalising piston (10),
c. wherein the liquid space (18a) is filled with a hydraulic fluid and the gas space (19a) with the restoring medium which is in the form of a gas, and
d. wherein a cross-sectional area of the multiplication piston (17) transversely to the stroke axis (H) is larger than a cross-sectional area of the equalising piston (10) transversely to the stroke axis (H).

11. Method for producing the gas strut (50) according to one of claims 1 to 10,
**characterised by** the following steps:
a. arranging the working cylinder (1) of the gas strut (50) in the equalising cylinder (12) of the gas strut (50),
b. filling the restoring medium, the equalising piston (10) and the equalising medium of the gas strut (50) in a space between the working cylinder (1) and the equalising cylinder (12) after the arranging,
c. introducing the working piston (2) and the working gas of the gas strut (50) into the working cylinder (1) after the step of arranging, and
d. gas-tight closing of the working cylinder (1) and the equalising cylinder (12) after the steps of filling and introducing.

12. Method according to claim 11,
**characterised by** the following steps:
a. simultaneous introducing of the working gas into the inner and outer working space (1a, 12a) and filling of the working gas as restoring medium into the restoring space (15a) of the gas strut (50), preferably through a non-return valve from the working space (1a) to the restoring space (15a), and
b. letting off part of the working medium from the inner and outer working space (1a, 12a) after the introducing and filling.

13. Method according to claim 11 or 12,
**characterised by** the following step:
widening a diameter of the equalising cylinder (12) measured transversely to the stroke axis (H) in a region of the equalising space (16a) and/or of the restoring space (15a) relatively to a region of the outer working space (12a).

14. Drive system for a flap comprising
a. the gas strut (50) according to one of claims 1 to 10 for supporting the flap, and
b. an electromechanical drive, preferably a spindle drive, for driving the flap.

## Revendications

1. Ressort à pression de gaz (50) comprenant
a. un cylindre de travail (1) qui renferme une chambre de travail intérieure (1a) rempli d'un gaz de travail,
b. un piston de travail (2) monté dans la chambre de travail intérieure (1a) de façon mobile le long d'un axe de course (H),
c. un cylindre de compensation (12) qui entoure le cylindre de travail (1) au moins sur une longueur partielle du cylindre de travail (1) le long de l'axe de course (H), et
d. un milieu de compensation qui est disposé dans une chambre de compensation (16a) radialement à l'axe de course (H) entre le cylindre de travail (1) et le cylindre de compensation (12) et qui se dilate lorsque la température augmente,
**caractérisé par**
e. une chambre de travail extérieure (12a) disposée radialement à l'axe de course (H) entre le cylindre de travail (1) et le cylindre de compensation (12),
i. la chambre de travail extérieure (12a) étant relié pour la conduction de gaz à la chambre de travail intérieur (1a) par un certain nombre d'ouvertures (1b) à travers une paroi de l'enveloppe du cylindre de travail (1),
f. un piston de compensation (10) entourant le cylindre de travail (1) radialement à l'axe de course (H), le piston de compensation (10)
i. étant monté coulissant le long de l'axe de course (H),
ii. délimitant la chambre de travail extérieure (12a) d'un côté transversal à l'axe de course (H) et
iii. étant sollicité par une pression du gaz de travail et par une pression du milieu de compensation d'une manière qui augmente le volume de la chambre de travail extérieure (12a), et
g. un milieu de rappel agencé dans une chambre de rappel (15a) radialement à l'axe de course (H) entre le cylindre de travail (1) et le cylindre de compensation (12), le piston de compensation (10) étant sollicité par une pression du milieu de rappel d'une manière qui réduit le volume de la chambre de travail extérieure (12a).

2. Ressort à pression de gaz (50) selon la revendication 1,
**caractérisé en ce que**
le piston de compensation (10) est disposé entièrement dans le cylindre de compensation (12).

3. Ressort à pression de gaz (50) selon la revendication 1 ou 2,
**caractérisé en ce que**
la chambre de travail extérieure (12a) est disposée entre la chambre de compensation (16a) et la chambre de rappel (15a) le long de l'axe de course (H).

4. Ressort à pression de gaz (50) selon l'une des revendications 1 à 3,
**caractérisé par**
un pilon (110) qui peut être expulsé par la pression du milieu de compensation de la chambre de compensation (16a) le long de l'axe de course (H) contre le piston de compensation (10), le pilon (110) ayant une section transversale plus petite transversalement à l'axe de course (H) que le piston de compensation (10).

5. Ressort à pression de gaz (50) selon l'une des revendications 1 à 4,
**caractérisé en ce que**
le cylindre de compensation (12) forme au moins un dépassement (12b) au-delà du cylindre de travail (1) le long de l'axe de course (H), l'au moins un dépassement (12b) contenant une partie de la chambre de rappel (15a).

6. Ressort à pression de gaz (50) selon la revendication 5,
**caractérisé par**
une tige de piston (6) fixée au piston de travail (2) et montée au cylindre de travail (1) de façon coulissante le long de l'axe de course (H), le dépassement (12b) étant agencé à l'extrémité du cylindre de travail (1) opposée de la tige de piston (6) le long de l'axe de course (H).

7. Ressort à pression de gaz (50) selon l'une des revendications 1 à 6,
**caractérisé en ce que**
la chambre de travail extérieure (12a) a un diamètre plus petit transversalement à l'axe de course (H) que la chambre de compensation (16a) et/ou la chambre de rappel (15a).

8. Ressort à pression de gaz (50) selon la revendication 7,
**caractérisé en ce que**
le cylindre de compensation (12) entoure la chambre de compensation (16a), la chambre de travail extérieure (12a) et la chambre de rappel (15a) radialement à l'axe de course (H), un diamètre du cylindre de compensation (12) mesuré transversalement à l'axe de course (H) étant élargi dans une région de la chambre de compensation (16a) et/ou de la chambre de rappel (15a) par rapport à une région de la chambre de travail extérieure (12a).

9. Ressort à pression de gaz (50) selon l'une des revendications 1 à 8,
**caractérisé en ce que**
le milieu de rappel est un gaz, de préférence le gaz de travail.

10. Ressort à pression de gaz (50) selon l'une des revendications 1 à 9,
**caractérisé en ce que**
a. la chambre de rappel (15a) contient un piston de transmission (17) qui est monté de façon mobile le long de l'axe de course (H),
b. le piston de transmission (17) divisant la chambre de rappel (15a) en une chambre à liquide (18a) en contact avec le piston compensateur (10) et une chambre à gaz (19a) qui est séparée du piston compensateur (10) d'une manière étanche au gaz,
c. la chambre à liquide (18a) étant rempli d'un liquide hydraulique et la chambre à gaz (19a) étant remplie du milieu de rappel étant un gaz, et
d. une surface de section transversale du piston de transmission (17) transversale à l'axe de course (H) étant plus grande qu'une surface de section transversale du piston de compensation (10) transversale à l'axe de course (H).

11. Procédé de fabrication du ressort à pression de gaz (50) selon l'une des revendications 1 à 10,
**caractérisé par** les étapes suivantes :
a. agencement du cylindre de travail (1) du ressort à gaz (50) dans le cylindre de compensation (12) du ressort à gaz (50),
b. remplissage du milieu de rappel, du piston de compensation (10) et du milieu de compensation du ressort à pression de gaz (50) dans un espace entre le cylindre de travail (1) et le cylindre de compensation (12) après l'agencement,
c. introduction du piston de travail (2) et du gaz de travail du ressort à pression de gaz (50) dans le cylindre de travail (1) après le remplissage et
d. fermeture étanche au gaz du cylindre de travail (1) et du cylindre de compensation (12) après le remplissage et l'introduction.

12. Procédé selon la revendication 11,
**caractérisé par** les étapes suivantes :
a. introduction du gaz de travail dans la chambre de travail intérieure et extérieure (1a, 12a) et remplissage simultané du gaz de travail comme milieu de rappel dans la chambre de rappel (15a) du ressort à pression de gaz (50), de préférence via un clapet anti-retour de la chambre de travail (1a) dans la chambre de rappel (15a), et
b. vidange d'une partie du gaz de travail de la chambre de travail intérieure et extérieure (1a, 12a) après l'introduction et le remplissage.

13. Procédé selon la revendication 11 ou 12,
**caractérisé par** l'étape suivante :
expansion d'un diamètre du cylindre de compensation (12) mesuré transversalement à l'axe de course (H) dans une région de la chambre de compensation (16a) et/ou de la chambre de rappel (15a) par rapport à une région de la chambre de travail extérieure (12a).

14. Système d'entraînement pour volet comprenant
a. le ressort à pression de gaz (50) selon l'une des revendications 1 à 10 pour supporter le volet et
b. un entraînement électromécanique, de préférence un système vis-noix, pour entraîner le volet.
